Europäisches Patentamt

European Patent Office

Office européen des brevets

(19)

(11)  **EP 1 125 173 B1**

(12)  **EUROPÄISCHE PATENTSCHRIFT**

(45) Veröffentlichungstag und Bekanntmachung des Hinweises auf die Patenterteilung:
**29.05.2002  Patentblatt 2002/22**

(51) Int Cl.$^7$: **G05B 19/404**

(21) Anmeldenummer: **99948907.3**

(22) Anmeldetag: **30.09.1999**

(86) Internationale Anmeldenummer:
**PCT/EP99/07245**

(87) Internationale Veröffentlichungsnummer:
**WO 00/25184 (04.05.2000 Gazette 2000/18)**

(54) **VERFAHREN ZUR KOMPENSATION VON TEMPERATURBEDINGTEN MASSABWEICHUNGEN IN DER MASCHINENGEOMETRIE**

METHOD FOR COMPENSATING DIMENSIONAL DEVIATIONS IN THE MACHINE GEOMETRY WHICH ARE DUE TO TEMPERATURE CHANGES

PROCEDE POUR LA COMPENSATION DE VARIATIONS DIMENSIONNELLES DUES A LA TEMPERATURE EN GEOMETRIE DE COMPOSANTS MECANIQUES

(84) Benannte Vertragsstaaten:
**CH DE FR GB IT LI**

(30) Priorität: **22.10.1998  DE 19848642**

(43) Veröffentlichungstag der Anmeldung:
**22.08.2001  Patentblatt 2001/34**

(73) Patentinhaber: **Dr. Johannes Heidenhain GmbH 83292 Traunreut (DE)**

(72) Erfinder:
• **RAUTH, Michael
  D-83301 Traunreut (DE)**
• **ZACEK, Johann
  D-83552 Evenhausen (DE)**

(56) Entgegenhaltungen:
**EP-A- 0 625 739**          **EP-A- 0 641 624**
**WO-A-97/43703**          **US-A- 5 408 758**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Kompensation temperaturabhäniger Abweichungen von Abmessungen einer Maschine in der kinematischen Beschreibung der Maschine nach Anspruch 1.

Es ist seit langem das Bestreben der Fachwelt temperaturabhängige Maßabweichungen bei Komponenten von Werkzeugmaschinen, durch welche die Genauigkeit der Werkzeugmaschine verschlechtert wird, durch geeignete Maßnahmen zur Kompensation wieder auszugleichen.

Beispielsweise aus der DE 36 33 573 C1 ist bekannt, zwei parallel ausgerichtete, unabhängige Meßsysteme zu verwenden, um eine temperaturabhängige Ausdehnung von Maschinenkomponenten zu kompensieren. Erfolgt eine temperaturabhängige Ausdehnung beispielsweise der Arbeitsspindelachse, wird die Differenzen der mit den beiden zur Arbeitsspindelachse parallelen Meßgeräten ermittelten Längen bestimmt. Bei bekannten Temperaturausdehnungskoeffizienten der beiden Meßsysteme und der Arbeitsspindel sowie bekannter Temperatur kann dann die Steuerung für die Position der Arbeitsspindel die insgesamt resultierende temperaturbedingte Ausdehnung errechnen und kompensieren.

Dabei ist von Nachteil, daß bei einer 5-Achs-Bearbeitung des Werkstücks aufgrund der zusätzlichen zwei Drehachsen die thermisch bedingten Längenänderungen von Maschinenkomponenten sich abhängig von den Stellungen der beiden Drehachsen in unterschiedliche Richtungen eines dreidimensionalen kartesischen Koordinatensystems auswirken. Weiterhin von Nachteil ist, daß an jedem Interpolationspunkt der Bahnkurve, entlang der das Werkzeug geführt wird, eine Temperaturkompensation neu berechnet werden muß.

Aus der DE 31 51 750 A1 ist bekannt, thermische Verschiebungen einer Spindel zu kompensieren. Dazu wird der Betrag der thermisch verursachten Verschiebung der Spindel zu einem bestimmten Zeitpunkt nach Einschalten in einem Speicher abgespeichert. Soll die Spindel positioniert werden, wird der für den Spindelvorschub befohlene Betrag unter Verwendung des für die thermisch verursachte Verschiebung gespeicherten Betrags kompensiert und die Spindel aufgrund der derart kompensierten Steuerdaten positioniert.

Dabei ist von Nachteil, daß auch diese Vorgehensweise nicht für eine schnelle 5-Achs-Bearbeitung geeignet ist, da für jeden einzelnen Interpolationspunkt einer Bahnkurve die thermische Verschiebung neu berechnet werden muß.

Aus der WO 97/46925 ist ein Verfahren zur Verbesserung der Genauigkeit einer Maschine bekannt. Dabei wird unter Benutzung eines Laser-Interferometers oder eines vergleichbaren dreidimensionalen Meßsystems die Position des Spindelkopfes bestimmt. Diese gemessene Position wird mit der programmierten Position des Spindelkopfes verglichen. Aus den Abweichungen dieser beiden Positionsangaben werden Korrekturwerte bestimmt und der Steuerung zur genauen Positionierung zugeleitet.

Dabei ist von Nachteil, daß ein sehr teures und empfindliches Meßgerät zur genauen Positionsbestimmung zusätzlich benötigt wird. Außerdem sind auch hier für eine 5-Achs-Bearbeitung für jeden Interpolationspunkt einer abzuarbeitenden Bahnkurve die Korrekturwerte bei der Positionsberechnung zu berücksichtigen.

Auch aus der DE 42 03 994 A1 ist eine automatische Wärmedehnungs-Kompensationseinrichtung bekannt. Dabei werden abhängig von den Signalen mehrerer Temperaturfühler Korrekturwerte ermittelt und dem Positionierantrieb zugeleitet. Einer der Temperaturfühler ist dabei an einem auswechselbaren Bearbeitungskopf montiert und liefert Signale zur Kompensation der Ausdehnung des Bearbeitungskopfes. Steht kein Ausgangssignal dieses Temperaturfühlers zur Verfügung, wird erkannt, daß kein Bearbeitungskopf angekoppelt ist und es wird keine zusätzliche Korrektur der Ausdehnung des Bearbeitungskopfes durchgeführt.

Auch bei dieser Ausgestaltung einer Kompensation thermischer Einflüsse auf die Maschinengeometrie ist von Nachteil, daß bei einer 5-Achs-Bearbeitung für jeden einzelnen Interpolationspunkt eine Temperaturkompensation berechnet werden muß.

Aus dem technischen Handbuch zur TNC 426 B und TNC 430 der Dr. Johannes Heidenhain GmbH, Seite 4-29 bis 4-38, ist bekannt schwenkbare Werkzeughalterungen und/oder Werkstückhalterungen vorzusehen, um eine 5-Achs-Bearbeitung zu ermöglichen. Liegt eine solche Drehung um mindestens eine Drehachse vor, wirkt sich beispielsweise eine thermische Ausdehnung entlang der Längsachse der Spindel nicht nur in eine Achsrichtung eines maschinenbezogenen, kartesischen Koordinatensystems aus, sondern mindestens in zwei Richtungen der Achsen eines derartigen Koordinatensystems. Die Komponente der Ausdehnung in Richtung der jeweiligen Achse des maschinenbezogenen, kartesischen Koordinatensystems ist abhängig von dem Winkel, den die geschwenkte Spindelachse mit den Achsen des Koordinatensystems einschließt und kann über trigonometrische Funktionen berechnet werden. Weiterhin ist aus dieser Veröffentlichung bekannt, daß für Bearbeitungsköpfe und Schwenktisch, welche um mindestens eine Achse des maschinenbezogenen kartesischen Koordinatensystems drehbar sind, sogenannte Maschinenparameter vorgesehen sind, um die durch diese Baugruppen verursachten Verschiebungen des Werkzeugs oder Werkstücks zu berücksichtigen und um die Kinematik dieser Baugruppen zu beschreiben. Soll beispielsweise ein NC-Satz abgearbeitet werden, beinhaltet dieser meist Koordinaten in einem werkstückbezogenen Koordinatensystem, die eine Bewegung der Werkzeugspitze, mit der die Bearbeitung des Werkstücks erfolgt, beschreiben. Diese Koordinaten müssen dann von der Steuerung - entsprechend den Freiheitsgraden der Maschinengeometrie - umgerechnet werden in Bewegungen der Motoren, die die Baugruppen der Maschine entlang den Achsen des maschinenbezogenen Koordinatensystems so bewegen, daß die Werkzeugspitze sich an der im NC-Satz programmierten Position befindet. Für eine Temperaturkompensation muß dann noch eine thermisch bedingte Veränderung der Maschinengeometrie berücksichtigt werden. Erst danach können die Steuersignale für die Motoren der Maschine für die gewünschte Bewegung bestimmt werden.

Dabei ist nachteilig, daß die bei einer 5-Achs-Bearbeitung sehr rechenaufwendigen trigonometrischen Berechnungen zur Kompensation einer thermischen Ausdehnung der Maschinengeometrie für jeden Interpolationspunkt einer Bahnkurve berechnet werden müssen.

Auch bei der EP 0 625 739 A1 wird die Kompensation für thermische Abweichungen in einem maschinenbezogenen Koordinatensystem durchgeführt.

Aufgabe der vorliegenden Erfindung ist es daher, ein Verfahren anzugeben, durch das es ermöglicht wird, auch bei einer 5-Achs-Bearbeitung eine einfache Temperaturkompensation ohne großen Rechenaufwand durchzuführen.

Diese Aufgabe wird durch ein Verfahren mit den Merkmalen des Anspruchs 1 gelöst.

Vorteilhafte Ausführungsformen des erfindungsgemäßen Verfahrens ergeben sich aus den Merkmalen der abhängigen Ansprüche.

Das erfindungsgemäße Verfahren weist den Vorteil auf, daß bereits vor der Abbildung der Benutzereingaben aus dem werkstückbezogenen Koordinatensystem in das maschinenbezogene Koordinatensystem Konfigurationsdaten berücksichtigt werden, die eine Temperaturkompensation beinhalten. Dadurch erfolgt die Temperaturkompensation vor der Koordinatentransformation, welche zur Berechnung der Steuersignale der Achsantriebe erforderlich ist. Eine Berücksichtigung thermischer Einflüsse auf die Istposition des Werkzeugs nach der Koordinatentransformation erübrigt sich. Durch die Berücksichtigung thermischer Einflüsse in der Maschinengeometrie mittels der Konfigurationsdaten entfällt somit die aufwendige, trigonometrische Berechnung der einzelnen Komponenten der thermischen Einflüsse in dem maschinenbezogenen Koordinatensystem. Weiterhin ist es dadurch bei einer Drehung um die Drehachsen A und/oder B nicht mehr erforderlich mit jedem Interpolationsschritt eine Temperaturkompensation neu zu berechnen.

Einzelheiten und weitere Vorteile der Erfindung werden im folgenden anhand der in der Zeichnung dargestellten Ausführungsform näher erläutert.

Es zeigt:

Figur 1: Eine mögliche Maschine zur 5-Achs-Bearbeitung mit einem maschinenbezogenen Koordinatensystem und einem werkstückbezogenen Koordinatensystem und

Figur 2: die Maschine aus Figur 1 mit um die Drehachsen A und B verkipptem Werkzeug zur 5-Achs-Bearbeitung.

Im folgenden wird davon ausgegangen, daß das erfindungsgemäße Verfahren bei einer Fräsmaschine angewendet wird, deren Werkzeug nicht nur parallel zu den orthogonalen Achsen x, y und z eines kartesischen Koordinatensystems , sondern zusätzlich auch um die Drehachsen A und B bewegt werden kann, wodurch eine 5-Achs-Bearbeitung ermöglicht wird. Diese Drehung kann dadurch erfolgen, daß entweder das Werkzeug mittels eines Schwenkkopfes oder das Werkstück mittels eines Drehtisches gedreht wird. In beiden Fällen ist eine 5-Achs-Bearbeitung möglich.

Ausgehend von den Benutzereingaben in Form von NC-Sätzen in einem Programm, welches ausgeführt wird, oder durch Betätigen der Achsrichtungstasten, welche eine Bewegung der Maschinenbaugruppen auslösen, werden in der Steuerung Steuersignale für die Achsantriebe der 5 Achsen der Fräsmaschine berechnet. Dabei wird jeder Achse mindestens ein Antrieb zugeordnet. Die Benutzereingaben erfolgen dabei immer in einem werkstückbezogenen Koordinatensystem und müssen in ein maschinenbezogenes Koordinatensystem umgerechnet werden. Diese Umrechnung ist insbesondere dann kompliziert und erfordert erhöhten Rechenaufwand, wenn eine Drehung um die Achsen A oder B vorliegt.

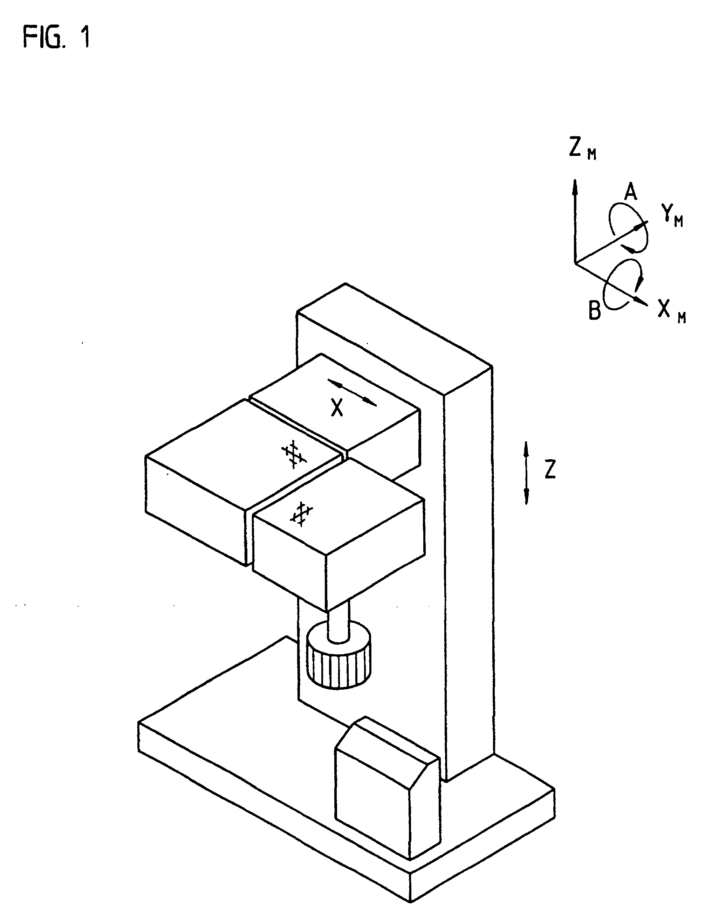

Betrachtet man zunächst ausschließlich eine Bewegung in der x-, y- und z-Achse, ohne daß die Drehachsen A und B verkippt werden, wie in Fig. 1 dargestellt, wird eine thermisch bedingte Ausdehnung der Maschinengeometrie, beispielsweise in x-Richtung, durch einen temperaturabhängigen Offset des Maschinenparameters für die x-Achse kompensiert. Durch diesen Maschinenparameter wird ursprünglich ausschließlich die Änderung der Maschinengeometrie durch Anbauteile berücksichtigt, die zwischen den Antrieben für die Maschinenachsen und dem Bearbeitungsort, an dem das Werkzeug auf das Werkstück einwirkt, beispielsweise durch unterschiedliche Bearbeitungsköpfe, in Form eines Offsetwerts für die x-, y- und z-Koordinaten berücksichtigt. Ein Maschinenparameter ist damit kein konstanter Wert mehr, sondern wird dadurch zu einer temperaturabhängigen Größe. Dadurch wird nunmehr vorteilhaft die thermische Ausdehnung bereits mit den Parametern der Maschinengeometrie bei Berechnungen berücksichtigt und es wird vorteilhaft keine separate Berechnung eines Werts für die Motoransteuerung aufgrund der thermischen Ausdehnung durchgeführt. Es entfällt somit eine separate rechnerische Berücksichtigung des durch die thermische Ausdehnung verursachten Fehlers zusätzlich zu dem aus Benutzereingabe und Maschinenparameter ursprünglich berechneten Wert für die Motoransteuerung.

Die Abhängigkeit der thermischen Ausdehnung kann dabei durch eine beliebige Funktion beschrieben werden, insbesondere durch eine lineare oder exponentielle Verknüpfung von Temperatur und thermischer Ausdehnung. Die Neuberechnung der thermischen Ausdehnung ist unabhängig von der Positionsbestimmung und kann beispielsweise aufgrund einer ermittelten Temperaturänderung durchgeführt werden.

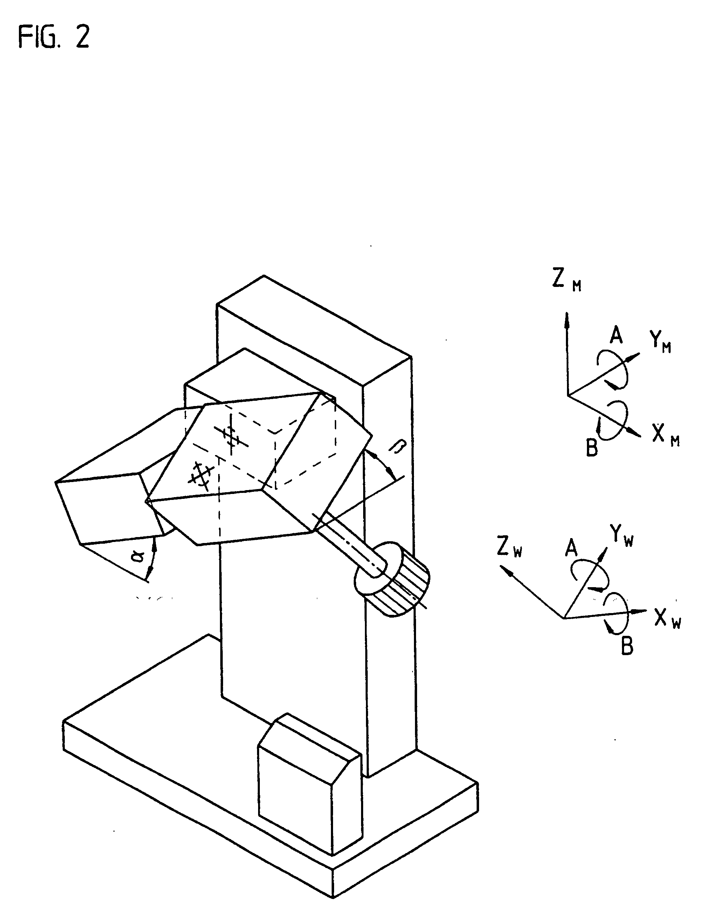

Dieses Vorgehen hat insbesondere bei einem Verkippen des Werkzeugs um die A- und/oder B-Achse, wie in Figur 2 dargestellt, wesentliche Vorteile. Bei einer Verkippung werden die Benutzereingaben in Form von Zielkoordinaten im werkstückbezogenen Koordinatensystem mittels einer Transformationsmatrix $\underline{\Delta}$ in maschinenbezogene Koordinaten umgerechnet, um aus den Sollkoordinaten im maschinenbezogenen Koordinatensystem die Sollwertvorgaben für die Achsantriebe ermitteln zu können. Das maschinenbezogene Koordinatensystem unterscheidet sich dabei vom werkstückbezogenen Koordinatensystem dadurch, daß sich das werkstückbezogene Koordinatensystem mit den Drehungen der A- und B-Achse mitdreht, das maschinenbezogene Koordinatensystem im Raum fixiert ist.

Die Abbildungsmatrix $\underline{\Delta}$ ist definiert als:

$$\underline{\Delta} = \begin{pmatrix} 1 & 0 & 0 & 0 \\ t_x & r_{11} & r_{12} & r_{13} \\ t_y & r_{21} & r_{22} & r_{23} \\ t_z & r_{31} & r_{32} & r_{33} \end{pmatrix}$$

Dabei berücksichtigen die Elemente $t_{x,y,z}$ einen translatorischen Anteil der Abbildung der werkstückbezogenen Koordinaten in ein maschinenbezogenes Koordinatensystem und die Elemente $r_{11}$ bis $r_{33}$ einen rotatorischen Anteil der werkstückbezogenen Koordinaten in ein maschinenbezogenes Koordinatensystem. Sobald eine Drehung um eine der Achsen A oder B erfolgt, werden somit die Elemente $r_{11}$ bis $r_{33}$ und die Elemente $t_{x,y,z}$ der Abbildungsmatrix $\underline{\Delta}$ neu berechnet und sobald eine Verschiebung entlang den Achsen erfolgt, müssen nur die Elemente $t_{x,y,z}$ neu berechnet werden.

Im einzelnen wird zur Umrechnung der Zielkoordinaten aus den Benutzereingaben in Steuersignale für die Achsantriebe erfindungsgemäß zunächst die Maschinengeometrie durch die Maschinenparameter berücksichtigt. Dafür werden die Maschinenparameter mit den aktuellen Winkelkoordinaten der Drehachsen in die Erstellung der Abbildungsmatrix einbezogen. Da die Maschinenparameter bereits Korrekturwerte für die Kompensation thermischer Ausdehnungen beinhalten, müssen diese nicht mehr gesondert behandelt werden. Anschließend erst wird der Vektor der Zielkoordinaten mit obiger Abbildungsmatrix $\underline{\Delta}$ verknüpft und dadurch

die Umrechnung ins maschinenbezogene Koordinatensystem erreicht. Hierfür wird der Vektor für den Zielpunkt homogen erweitert, so daß seine erste Koordinate eine 1 enthält. Der daraus resultierende Vektor enthält die bereits temperaturkompensierten Zielkoordinaten dann im maschinenbezogenen Koordinatensystem. Diese maschinenbezogenen Koordinaten werden dann dafür benutzt, um die Steuersignale für die Achsantriebe zu ermitteln. Dadurch wird sichergestellt, daß trotz der Verkippung des Werkzeugs oder des Werkstücks die Achsantriebe derart angesteuert werden, daß die im werkstückbezogenen Koordinatensystem eingegebene Bahnkurve temperaturkompensiert abgearbeitet wird, wofür nur eine einzige Verknüpfung mit der Abbildungsmatrix $\underline{\Delta}$ erforderlich ist.

Aufgrund der frühzeitigen Berücksichtigung von Werten zur Kompensation der thermischen Ausdehnung von Maschinenbaugruppen in den Maschinenparametern, die bisher ausschließlich zur Adaption individueller Ausgestaltungen einer Werkzeugmaschine dienten, werden die Werte zur Kompensation der thermischen Ausdehnung zusammen mit den Maschinenparametern in die Abbildungsmatrix $\underline{\Delta}$ eingerechnet. Dadurch wird erreicht, daß relativ rechenaufwendige Operationen nicht getrennt für die Temperaturkompensation ausgeführt werden müssen, beziehungsweise daß die Temperaturkompensation nicht gesondert im maschinenbezogenen Koordinatensystem berechnet werden muß.

**Patentansprüche**

1. Verfahren zur Kompensation von temperaturbedingten Maßabweichungen in der Maschinengeometrie, insbesondere einer Werkzeugmaschine oder eines Roboters, bei dem Benutzer-Eingaben in einem ersten Koordinatensystem durchgeführt werden und eine Umrechnung in ein zweites Koordinatensystem erfolgt, um Steuersignale für die Achsantriebe zu bestimmen, **dadurch gekennzeichnet, daß** die Kompensation von temperaturbedingten Maßabweichungen unter Berücksichtigung einer temperaturabhängigen Größe vor der Umrechnung der Koordinaten aus dem ersten in das zweite Koordinatensystem erfolgt.

2. Verfahren nach Anspruch 1, **dadurch gekennzeichnet, daß** ein oder mehrere Offsetwerte für durch ein oder mehrere veränderbare Maschinenbaugruppen verursachte translatorische und/oder rotatorische Verschiebungen des Bearbeitungspunktes, an dem das Werkzeug auf das Werkstück trifft, in Konfigurationsdaten bezüglich des ersten Koordinatensystems gespeichert werden und daß die Offsetwerte eine Komponente aufweisen, welche die temperaturbedingten Maßabweichungen kompensiert.

**3.** Verfahren nach Anspruch 1 oder 2, **dadurch gekennzeichnet, daß** die Eingaben durch den Benutzer in Form von direkten Eingaben an der Steuerung, die unmittelbar ausgeführt werden, oder in Form von NC-Sätzen erfolgen, die erst zu einem späteren Zeitpunkt ausgeführt werden.

**4.** Verfahren nach einem der Ansprüche 1 bis 3, **dadurch gekennzeichnet, daß** die Konfigurationsdaten sich aus einem konstanten Offsetwert und einem additiven temperaturabhängigen Anteil zusammensetzen.

**5.** Verfahren nach einem der Ansprüche 1 bis 4, **dadurch gekennzeichnet, daß** das erste Koordinatensystem ein werkzeug- oder werkstückbezogenes Koordinatensystem und das zweite Koordinatensystem ein maschinenbezogenes Koordinatensystem ist.

**6.** Verfahren nach einem der Ansprüche 1 bis 5, **dadurch gekennzeichnet, daß** die Ermittlung von temperaturbedingten Maßabweichungen mittels eines linearen oder exponentiellen Modells für die thermische Ausdehnung der Maschine erfolgt.

**7.** Verfahren nach einem der Ansprüche 1 bis 6, **dadurch gekennzeichnet, daß** die temperaturbedingten Maßabweichungen immer dann neu berechnet werden, wenn sich die detektierte Temperatur um einen Mindestwert verändert hat.

**Claims**

**1.** Method for compensating for temperature-conditioned dimensional deviations in machine geometry, in particular of a machine tool or of a robot, in which information input by a user is implemented in a first coordinate system and a conversion into a second coordinate system is effected in order to determine control signals for the axle drives, **characterised in that** compensation of temperature-conditioned dimensional deviations taking into consideration a temperature-dependent value is effected before the conversion of the coordinates from the first coordinate system into the second coordinate system.

**2.** Method according to claim 1, **characterised in that** one or more offset values for translatory and/or rotary displacements of the machining point at which the tool meets the workpiece, said values being caused by one or more variable machine subassemblies, are stored in configuration data with respect to the first coordinate system, and **in that** the offset values have a component which compensates for the temperature-conditioned dimensional deviations.

**3.** Method according to claim 1 or 2, **characterised in that** the inputs are effected by the user in the form of direct inputs at the control, which are immediately implemented, or in the form of NC records which are only implemented at a later point in time.

**4.** Method according to one of the claims 1 to 3, **characterised in that** the configuration data are composed of a constant offset value and of an additive, temperature-dependent portion.

**5.** Method according to one of the claims 1 to 4, **characterised in that** the first coordinate system is a tool- or workpiece-specific coordinate system and the second coordinate system is a machine-specific coordinate system.

**6.** Method according to one of the claims 1 to 5, **characterised in that** the determination of temperature-conditioned dimensional deviations is effected by means of a linear or exponential model for the thermal expansion of the machine.

**7.** Method according to one of the claims 1 to 6, **characterised in that** the temperature-conditioned dimensional deviations are always recalculated when the detected temperature has changed by a minimum value.

**Revendications**

**1.** Procédé pour la compensation de variations dimensionnelles de la géométrie de machines dues à la température, en particulier d'une machine-outil ou d'un robot, selon lequel on exécute des données d'utilisateur dans un premier système de coordonnées et on réalise une conversion dans un second système de coordonnées afin de déterminer des signaux de commande pour les entraînements d'axes, **caractérisé en ce qu'**on opère la compensation des variations dimensionnelles dues à la température en prenant en compte une grandeur dépendante de la température avant la conversion des coordonnées du premier vers le second système de coordonnées ;

**2.** Procédé selon la revendication 1, **caractérisé en ce qu'**on mémorise une ou plusieurs valeurs de décalage pour des déplacements en translation et/ou en rotation du point d'usinage où l'outil touche la pièce, générés par un ou plusieurs composants de la machine, dans des données de configuration par rapport au premier système de coordonnées et **en ce que** les valeurs de décalage présentent une composante qui compense les variations dimensionnelles dues à la température.

3. Procédé selon la revendication 1 ou 2, **caractérisé en ce que** l'introduction des données par l'utilisateur a lieu sous la forme d'introductions directes au niveau de la commande qui sont exécutées directement ou sous la forme de jeux d'instructions CN qui sont exécutées à un instant ultérieur.

4. Procédé selon une des revendications 1 à 3, **caractérisé en ce que** les données de configuration se composent d'une valeur de décalage constante et d'une partie ajoutée dépendante de la température.

5. Procédé selon une des revendications 1 à 4, **caractérisé en ce que** le premier système de coordonnées est un système de coordonnées référencé outil ou pièce et le second système de coordonnées est un système de coordonnées référencé machine.

6. Procédé selon une des revendications 1 à 5, **caractérisé en ce qu'**on détermine les variations dimensionnelles dues à la température à l'aide d'un modèle linéaire ou exponentiel pour la dilatation thermique de la machine.

7. Procédé selon une des revendications 1 à 6, **caractérisé en ce qu'**on recalcule les variations dimensionnelles dues à la température chaque fois que la température détectée a évolué d'une valeur minimale.

FIG. 1

FIG. 2